# EUROPÄISCHE PATENTANMELDUNG

(11) **EP 2 450 471 A1**
(43) Veröffentlichungstag der Anmeldung: **09.05.2012**
(21) Anmeldenummer: 10189840.1
(22) Anmeldetag: 03.11.2010
(51) Int. Cl.: C23C 24/10, B22F 3/105, B23K 26/34, B23P 6/00, B29C 67/00

(54) **Verfahren zum Materialauftrag zur Reparatur eines Bauteils und Bauteil**

(71) Anmelder: SIEMENS AKTIENGESELLSCHAFT, 80333 München (DE)
(72) Erfinder: Kaiser, Axel, 41462, Neuss (DE)

(57) **Zusammenfassung**

Durch die Kombination von zwei verschiedenen Verfahren gelingt es, die Vorteile des Schweiß- und Lötverfahrens miteinander zu kombinieren.

## Beschreibung

Die Erfindung betrifft ein Verfahren zum Materialauftrag, bei dem eine poröse Struktur und ein Lot verwendet wird und ein Bauteil.

Vertiefungen von ausgemuldeten Rissen oder größere Risse werden durch Laserschweißverfahren aufgefüllt und dadurch repariert. Dabei ist der Wärmeeintrag jedoch oft zu groß und es bilden sich Risse an der Verbindungsfläche.

Lötverfahren können ebenfalls verwendet werden, wobei jedoch die Festigkeit des Lots bzw. die Verbindung des Lotmaterials zum Substrat nicht immer ausreichend ist.

Es ist daher Aufgabe der Erfindung o.g. Probleme zu lösen.

Die Aufgabe wird gelöst durch ein Verfahren gemäß Anspruch 1 in ein Bauteil gemäß Anspruch 7.

In den Unteransprüchen sind weitere vorteilhafte Maßnahmen aufgelistet, die beliebig miteinander kombiniert werden können, um weitere Vorteile zu erzielen.

Es zeigen
- Figur 1,2,3,4: schematisch den Ablauf des Verfahrens,
- Figur 5: eine Gasturbine
- Figur 6: eine Turbinenschaufel
- Figur 7: eine Brennkammer,
- Figur 8: eine Liste von Superlegierungen.

Die Figuren und Beschreibung stellen nur Ausführungsbeispiele der Erfindung dar.

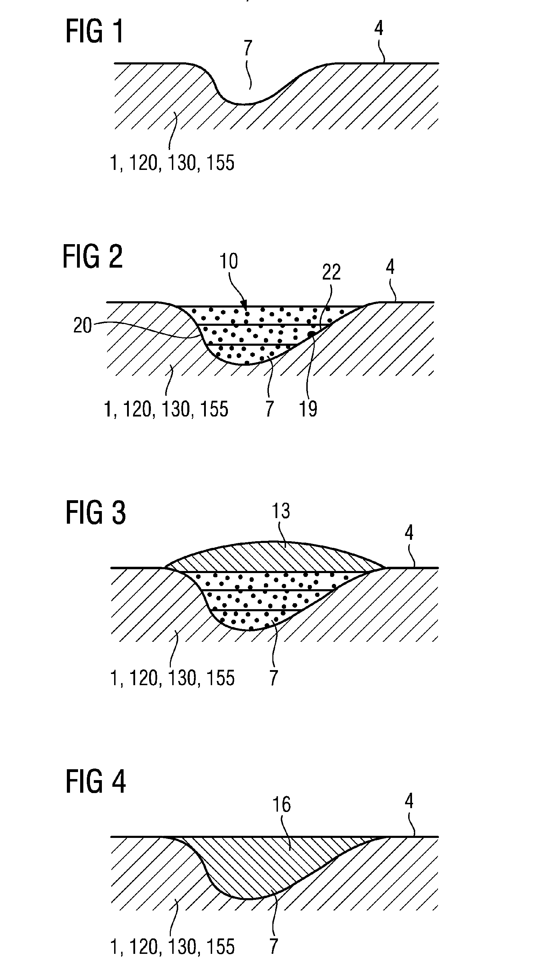

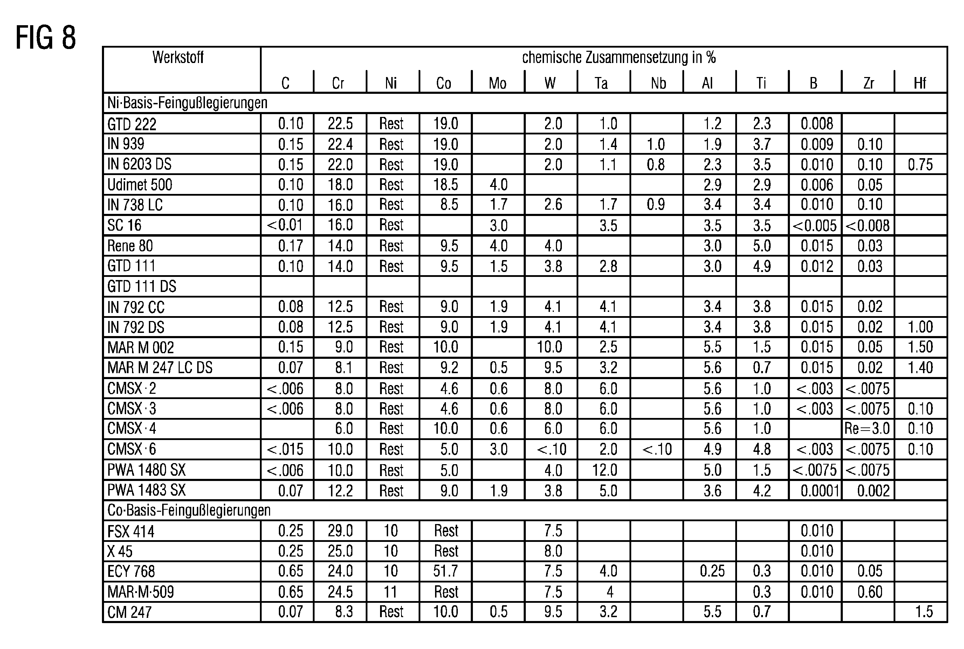

In Figur 1 ist ein Substrat 1 eines Bauteils 120, 130, 155, vorzugsweise mit einer Vertiefung 7 gezeigt. Das Substrat 1 weist vorzugsweise eine Superlegierung gemäß Figur 8 auf, vorzugsweise besteht sie aus einer dieser Superlegierungen.

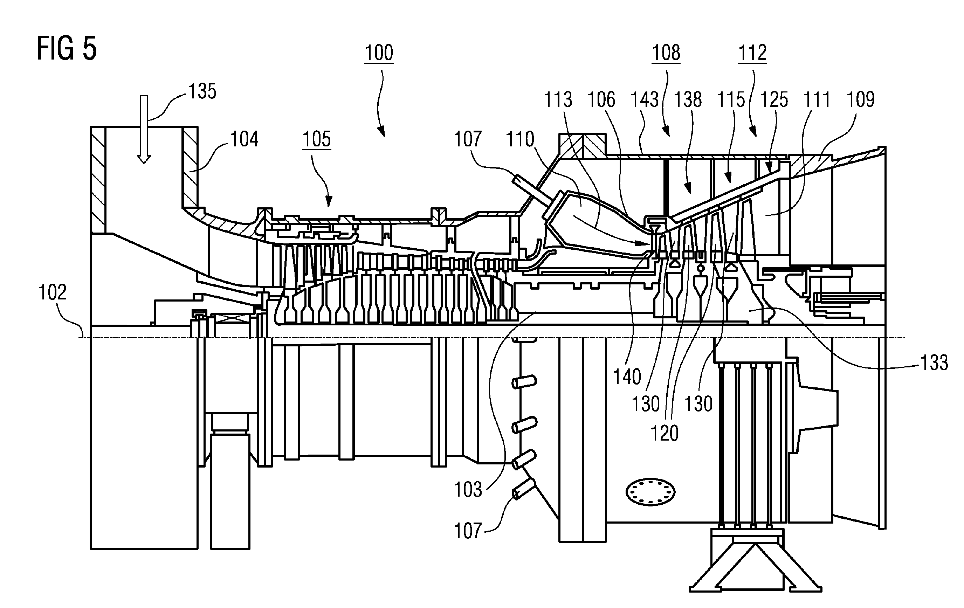

Das Substrat 1 wird vorzugsweise verwendet für eine Turbinenschaufel 120, 130 oder eine Brennkammer oder einem Element 155 einer Brennkammer, wobei diese für Turbinen einer Dampfoder Gasturbine 100 (Fig. 5) eingesetzt werden können.

Auf eine Oberfläche 4 oder in die Mulde 7 oder Vertiefung 7, die vorzugsweise einen ausgemuldeten Riss oder eine Fläche darstellt, soll großflächig Material aufgetragen werden.

Dabei wird in einem ersten Schritt vorzugsweise durch ein Rapid-Prototype-Verfahren, vorzugsweise direkt auf dem Substrat 1 oder direkt in der Vertiefung 7 eine poröse Struktur 10 erzeugt. Dies kann durch ein Sinter-Verfahren oder ein Schmelzverfahren erfolgen. Dabei wird ein vorzugsweise Laser- oder Elektronenstrahl verwendet.

Dies kann vorzugsweise dadurch erfolgen, dass schichtweise Pulver in die Vertiefung 7 eingebracht wird, welches entlang unter Wahrung einer bestimmten Geometrie verdichtet wird. Dies wird schichtweise fortgeführt, bis die gewünschte Höhe erreicht ist. Die poröse Struktur 10 ist mit der Vertiefung 7 schmelzmetallurgisch, zumindest mechanisch verbunden.

Dabei kann das Pulver versintert oder aufgeschmolzen werden. Das Aufschmelzen hat den Vorteil, dass sich schmelzmetallurgische Verbindungen 19 der porösen Struktur 10 an der Begrenzungswand 22 des Substrats 1 innerhalb der Vertiefung 7 oder auf dem Substrat 1 bilden.

Die poröse Struktur 10 kann beliebig ausgebildet sein, wie sie auch in bekannten Verfahren im Stand der Technik verwendet werden, um poröse Strukturen zu erzeugen, wobei die Porosität eine offene Porosität darstellt, aber in ihrer Form und Verteilung in jeder Richtung Gradienten aufweisen kann. Die poröse Struktur 10 kann vorzugsweise durch Balken gebildet werden, deren Berührungspunkten durch Sintern oder allgemein vorzugsweise schmelzmetallurgisch miteinander verbunden sind. Die poröse Struktur 10 kann auch ein vorgefertigtes massives Material (Schaum, Matte) sein, das mit der Kontaktfläche 20 der Mulde verbunden, insbesondere schmelzmetallurgisch verbunden wird.

Ebenso können einzelne Drähte eingebracht werden, die an ihren Enden 19 mit der Kontaktfläche 20 der Vertiefung 7 verbunden, insbesondere schmelzmetallurgisch verbunden werden.

Die poröse Struktur 10 erstreckt sich vorzugsweise über das gesamte aufzufüllende oder aufzutragende Volumen.

Nachdem die poröse Struktur 10 erstellt ist und mit dem Substrat verbunden ist, wird ein Lotmaterial 13 vorzugsweise aufgebracht (Figur 3) und durch eine Wärmebehandlung dringt das flüssige Lotmaterial 13 die poröse Struktur 10 ein und bildet ein Volumen 16, dass die Vertiefung 7 ausfüllt. Weitere Methoden zur Auffüllung mit Lot sind möglich.

Die Materialien für die poröse Struktur 10 und das Lotmaterial 13 sind verschieden, d.h. sie weisen verschiedene Schmelzpunkte auf (vorzugsweise mindestens 10K).

Das Material für die poröse Struktur 10 ist ein Material, das eine gleiche oder höhere Schmelztemperatur als das Material des Substrats 1 aufweist, oder zumindest 10K höher als das Lotmaterial. Vorzugsweise ist das Material für die poröse Struktur 10 dasselbe oder nur ein leicht modifiziertes Material des Substrats 1.

Für das Lotmaterial 13 kann jedes beliebige Lotmaterial aus dem Stand der Technik für die Anwendung im Hochtemperaturbereich verwendet werden.

Die so aufgefüllte Vertiefung 7 mit der porösen Struktur 10 kann noch geglättet werden oder sonst wie an der Oberfläche bearbeitet werden und kann wiederum neu beschichtet werden. Die Figur 5 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

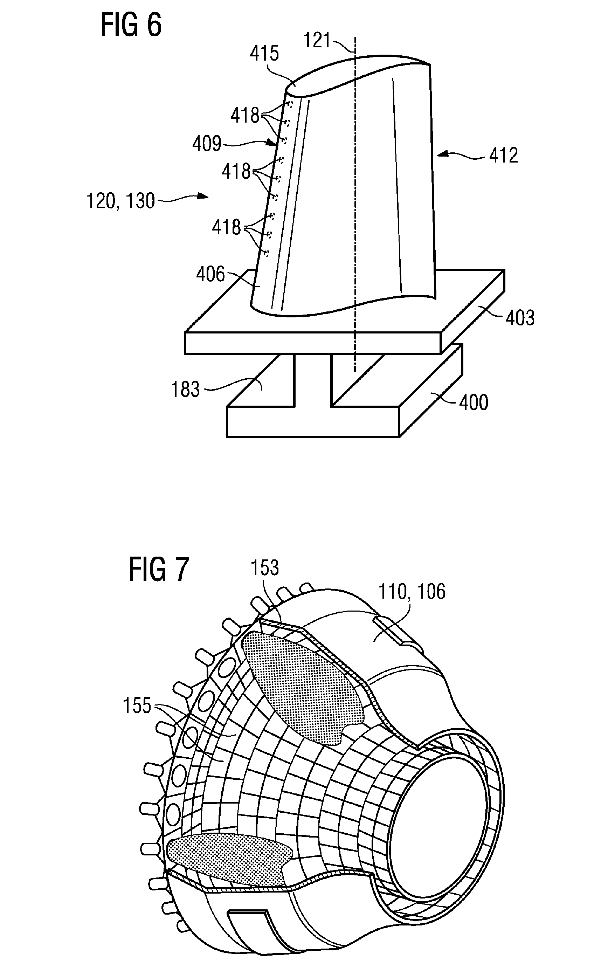

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zum Materialauftrag,
insbesondere zur Rissreparatur einer Vertiefung (7) eines Substrats (1),
bei dem zuerst eine poröse Struktur (10),
insbesondere (7) in der Vertiefung (7) erzeugt oder eingebracht wird,
die (10) mit der Vertiefung (7),
insbesondere mechanisch,
ganz insbesondere schmelzmetallurgisch verbunden ist oder wird und
wobei die poröse Struktur (10) durch ein Lotmaterial (13) aufgefüllt wird.

2. Verfahren nach Anspruch 1,
bei dem durch ein Rapid-Prototype-Verfahren die poröse Struktur (10) erzeugt wird,
insbesondere direkt auf dem Substrat (1) oder direkt in der Vertiefung (7).

3. Verfahren nach Anspruch 2,
bei dem ein Sinter-Verfahren,
insbesondere Laser-Sinter-Verfahren,
zur Erzeugung der porösen Struktur (10) verwendet wird.

4. Verfahren nach Anspruch 2,
bei dem ein Schmelz-Verfahren,
insbesondere ein Laser-Schmelzverfahren
zur Erzeugung der porösen Struktur (10) verwendet wird.

5. Verfahren nach Anspruch 1, 2, 3 oder 4,
bei dem die poröse Struktur (10) mit einer Innenfläche (22) der Vertiefung (7) oder des Substrats (1) schmelzmetallurgische Verbindungspunkte (19) oder Verbindungsflächen aufweist.

6. Verfahren nach Anspruch 1, 2, 3, 4, 5 oder 5,
bei dem die poröse Struktur durch balkenförmige Elemente gebildet wird.

7. Bauteil,
insbesondere herstellt nach einem oder mehreren der Ansprüche 1 bis 6,
das in einer Vertiefung (7) eine poröse Struktur (10) aus einem ersten Material aufweist,
wobei die poröse Struktur (10) durch ein zweites, verschiedenes Material, einem Lotmaterial aufgefüllt ist.

8. Verfahren oder Bauteil nach Anspruch 1, 2, 3, 4, 5, 6 oder 7,
bei dem das Material für die poröse Struktur (10) dem Material des Substrats (1) entspricht.

9. Verfahren oder Bauteil mit 1, 2, 3, 4, 5, 6, 7 oder 8, bei dem das Material für die poröse Struktur (10) von dem Material des Substrats (1) und/oder dem Lötmaterial (13) verschieden ist.

10. Verfahren oder Bauteil nach einem oder mehreren der vorhergehenden Ansprüche,
bei dem die poröse Struktur (10) zumindest teilweise, insbesondere vollständig eine offene Porosität aufweist.

11. Verfahren oder Bauteil nach einem oder mehreren der vorhergehenden Ansprüche,
bei dem die Schmelztemperatur des Materials für die poröse Struktur (10) höher ist als die des Lotmaterials (13), insbesondere mindestens um 10K.
